# EUROPÄISCHE PATENTSCHRIFT

(11) **EP 2 969 988 B1**
(45) Veröffentlichungstag und Bekanntmachung des Hinweises auf die Patenterteilung: **07.02.2018**
(21) Anmeldenummer: 14708902.3
(22) Anmeldetag: 11.03.2014
(51) Int. Cl.: C03C 10/00, C04B 35/10, C04B 35/18, C04B 38/00

(54) **KERAMISCHES MATERIAL**
CERAMIC MATERIAL
MATERIAU CÉRAMIQUE

(30) Priorität: 11.03.2013 EP 13158616
(43) Veröffentlichungstag der Anmeldung: 20.01.2016
(73) Patentinhaber: Keramik Holding AG Laufen, CH-4242 Laufen (CH)
(72) Erfinder: FISCHER, Werner, 39340 Haldensleben (DE)
(74) Vertreter: Bohest AG
(86) Internationale Anmeldenummer: PCT/EP2014/054666
(87) Internationale Veröffentlichungsnummer: WO 2014/139993

(56) Entgegenhaltungen:
- EP-A2- 0 332 457
- GB-A- 2 177 390
- US-A- 4 418 024
- US-A- 4 418 025
- US-A- 4 427 785
- US-A- 4 895 814
- TUNÇEL D Y ET AL: "Evaluation of pyroplastic deformation in sanitaryware porcelain bodies", CERAMICS INTERNATIONAL PUBLISHED ON BEHALF ON TECHNA S.R.L. BY ELSEVIER SCIENCE LTD. UK, Bd. 38, Nr. 2, März 2012 (2012-03), Seiten 1399-1407, XP002696582, ISSN: 0272-8842

## Beschreibung

### Gebiet der Erfindung

Die vorliegende Erfindung betrifft das Gebiet der keramischen Materialien zur Herstellung verschiedener Artikel wie Sanitärartikel, Geschirr und Baumaterialien.

### Stand der Technik

Sanitärartikel werden im Allgemeinen entweder aus dichtbrennendem keramischen Material, sogenannter Vitreous-China (= porzellanartige Masse) mit einem Wasseraufnahmevermögen von ≤ 0,75% oder aus einer porösbrennenden keramischen Masse mit einem Wasseraufnahmevermögen von > 0,75% gebrannt. Dabei werden die dichtbrennenden Vitreous-China-Massen mit Wasseraufnahmevermögen ≤ 0,75% für Klosetts, Urinale und kleinere Artikel, die porösbrennenden Massen aufgrund ihrer geringeren Deformation und Schwindung beim Brennen für grössere masshaltige Artikel eingesetzt.

Für alle sanitärkeramischen Massen ist es ein wesentliches Charakteristikum im Stand der Technik, dass alle Rohstoffe als kristalline, feindispers aufbereitete Pulver eingesetzt werden.

Poröse sanitärkeramische Massen, fachmännisch als Feinfeuertonmassen bezeichnet, werden im Allgemeinen durch Zugabe von schamottierten Tonen zu einer Vitreous-China-Masse erhalten.

EP 0 584 977 A1 offenbart eine dichtbrennende Masse ("vitreous china"), die im gebrannten Zustand 25-70 Gewichtsprozent einer Glasphase und 75-30 Gewichtsprozent einer kristallinen Phase aufweist. Die Glasphase enthält als Hauptbestandteile 50-75 Gewichtsprozent SiO₂, 17-40 Gewichtsprozent Al₂O₃ und 4-12 Gewichtsprozent K₂O+Na₂O, bezogen auf die Glasphase; die kristalline Phase enthält als Hauptbestandteile 10-60 Gewichtsprozent α-Al₂O₃, 0-20 Gewichtsprozent Quarz und 2-20 Gewichtsprozent Mullit, bezogen auf die Gesamtmasse der dichtbrennenden Masse. Diese dichtbrennende Masse kann zu Sanitärartikeln verarbeitet werden.

US 6,242,117 B offenbart eine gebrannte keramische Masse, die im Scherben ("ceramic blank") 25-75 Gewichtsprozent einer Glasphase und 30-70 Gewichtsprozent einer Kristallphase aufweist. Die Glasphase enthält als Hauptbestandteile 50-80 Gewichtsprozent SiO₂ und 10-35 Gewichtsprozent Al₂O₃, bezogen auf die Glasphase; die Kristallphase enthält als Hauptbestandteile 10-60 Korund, 1-30 Gewichtsprozent Quarz und 1-30 Gewichtsprozent Mullit, bezogen auf die Kristallphase. Sanitärartikel wie Toilettenschüsseln, Urinale, Urinaltanks und Lavabos aus diesen Massen werden auch offenbart.

DE 101 45 537 A1 offenbart einerseits eine keramische Masse, die für das Dichtbrennen ("vitreous china") geeignet ist, und die nach dem Brand SiO₂ zu 42-59 Masse%, Al₂O₃ zu 35-52 Masse%, Na₂O zu 0,5-2 Masse%, K₂O zu 0,5-2 Masse% und TiO₂ zu 0,5-4 Masse% enthält. Sie offenbart andererseits eine keramische Masse, die für das Porösbrennen geeignet ist, und die nach dem Brand SiO₂ zu 50-65 Masse%, Al₂O₃ zu 30-50 Masse%, Na₂O zu 0,5-2 Masse%, K₂O zu 0,5-2 Masse%, MgO oder CaO zu je 0,5-4 Masse% und TiO₂ zu 0,5-2 Masse% enthält. Sie offenbart des Weiteren Sanitärartikel aus diesen gebrannten keramischen Massen.

Die vorliegende Erfindung setzt sich zum Ziel, eine verbesserte keramische Masse, die für das Porösbrennen zur Herstellung von u.A. Sanitärartikeln geeignet ist, bereitzustellen.

### Zusammenfassung der Erfindung

Die Erfindung stellt entsprechend bereit:
(1) Zum Porösbrennen geeignete keramische Masse, umfassend nach dem Brennen SiO₂ 18-35 Gewichtsprozent, Al₂O₃ 54-76 Gewichtsprozent, Na₂O 0,5-2 Gewichtsprozent, K₂O 0,5-2 Gewichtsprozent, TiO₂ 0-4 Gewichtsprozent, Li₂O 0-7 Gewichtsprozent, CaO 0-1 Gewichtsprozent, MgO 0-5 Gewichtsprozent, Fe₂O₃ 0-2 Gewichtsprozent, B₂O₃ 0-6 Gewichtsprozent und BaO 0-4 Gewichtsprozent, bezogen auf die Masse nach dem Brennen.
(2) Keramische Masse nach obigem (1), umfassend nach dem Brennen: SiO₂ 18-35 Gewichtsprozent, Al₂O₃ 54-76 Gewichtsprozent, Na₂O 0,5-2 Gewichtsprozent, K₂O 0,5-2 Gewichtsprozent, TiO₂ 0-0,01 Gewichtsprozent, Li₂O 0-0,01 Gewichtsprozent, CaO 0-0,01 Gewichtsprozent, MgO 0-0,01 Gewichtsprozent, Fe₂O₃ 0-0,01 Gewichtsprozent, B₂O₃ 0-0,01 Gewichtsprozent und BaO 0-0,01 Gewichtsprozent, bezogen auf die Masse nach dem Brennen.
(3) Keramische Masse nach obigem (1), umfassend nach dem Brennen: SiO₂ 18-35 Gewichtsprozent, Al₂O₃ 54-76 Gewichtsprozent, Na₂O 0,5-2 Gewichtsprozent, K₂O 0,5-2 Gewichtsprozent, TiO₂ 0,5-4 Gewichtsprozent, Li₂O 0,5-7 Gewichtsprozent, CaO 0,1-1 Gewichtsprozent, MgO 0,5-5 Gewichtsprozent, Fe₂O₃ 0,1-2 Gewichtsprozent, B₂O₃ 0,5-6 Gewichtsprozent und BaO 0,5-4 Gewichtsprozent, bezogen auf die Masse nach dem Brennen.
(4) Keramische Masse nach obigem (1), umfassend nach dem Brennen: SiO₂ 25-30 Gewichtsprozent, Al₂O₃ 60-70 Gewichtsprozent, Na₂O 0,5-1,5 Gewichtsprozent, K₂O 0,5-1,5 Gewichtsprozent, TiO₂ 0-1 Gewichtsprozent, Li₂O 0-0,01 Gewichtsprozent, CaO 0-0,5 Gewichtsprozent, MgO 0-0,02 Gewichtsprozent, Fe₂O₃ 0-0,5 Gewichtsprozent, B₂O₃ 0-0,01 Gewichtsprozent und BaO 0-0,01 Gewichtsprozent, bezogen auf die Masse nach dem Brennen.
(5) Keramische Masse nach obigem (1), umfassend nach dem Brennen: SiO₂ 26-29 Gewichtsprozent, Al₂O₃ 64-70 Gewichtsprozent, Na₂O 0,8-1,1 Gewichtsprozent, K₂O 0,8-1,1 Gewichtsprozent, TiO₂ 0,3-0,7 Gewichtsprozent, Li₂O 0-0,01 Gewichtsprozent, CaO 0,2-0,3 Gewichtsprozent, MgO 0-0,02 Gewichtsprozent, Fe₂O₃ 0,2-0,3 Gewichtsprozent, B₂O₃ 0-0,01 Gewichtsprozent und BaO 0-0,01 Gewichtsprozent, bezogen auf die Masse nach dem Brennen.
(6) Sanitärartikel, Tafelgeschirr oder Baumaterial, bestehend aus einer gebrannten keramischen Masse nach einem der obigen (1) bis (5).
(7) Verfahren zur Herstellung einer zum Porösbrennen geeigneten keramischen Masse nach einem der obigen (1) bis (5), umfassend die Schritte:
   a) Bereitstellen der aus Na₂O, K₂O, TiO₂, Li₂O, CaO, MgO, Fe₂O₃, B₂O₃ und BaO ausgewählten Flussmittel, in den jeweiligen für die zum Porösbrennen geeignete keramische Masse erforderlichen Mengen;
   b) Aufschmelzen der Flussmittel in einer Menge SiO₂, die 10 bis 20 Gewichtsprozenten der gesamten Menge SiO₂ in der zum Porösbrennen geeigneten keramischen Masse entspricht;
   c) Abschrecken der Schmelze in Wasser zum Erhalt eines amorphen, glasartigen Materials;
   d) Vermahlen des amorphen glasartigen Materials zu einem Pulver;
   e) Vermischen des amorphen glasartigen Pulvers mit der restlichen, für die zum Porösbrennen geeignete keramische Masse erforderlichen Menge SiO₂ und der für die zum Porösbrennen geeignete keramische Masse erforderlichen Menge Al₂O₃, und, gewünschtenfalls, mit Wasser unter Erhalt eines Schlickers;
   f) gewünschtenfalls, sofern im Schritt e) Wasser mitverwendet wurde, Giessen des Schlickers in eine Gussform zum Erhalt eines Giesslings;
   g) sofern Schritt f) durchgeführt wurde, Entformen des Giesslings; und
   h) sofern im Schritt e) Wasser mitverwendet wurde, Trocknen des Schlickers.
8. Verfahren nach obigem (7), dadurch gekennzeichnet, dass im Schritt e) Wasser mitverwendet und ein Schlicker erhalten wird, und dass Schritt f) durchgeführt wird.
9. Verfahren nach obigem (8), dadurch gekennzeichnet, dass die Gussform eine poröse Gipsform oder eine Kunststoffform ist.

### Genaue Beschreibung der Erfindung

Erfindungsgemäss wird vorgeschlagen, den Al₂O₃-Gehalt über den in den eingangs erwähnten Publikationen offenbarten Gehalt hinaus zu erhöhen und, damit einhergehend, den Gehalt an SiO₂ unter die dort offenbarten Gehalte zu senken. Gleichzeitig wird auf die im Stand der Technik übliche Zugabe von schamottierten Tonen verzichtet und die Ausgangsmaterialien für die Glasphase, insbesondere die Flussmittel und typisch 10 bis 20 Gewichtsprozent des gesamten in der erfindungsgemässen, zum Porösbrennen geeigneten keramischen Masse vorhandenen SiO₂, werden erfindungsgemäss bevorzugt als amorpher glasartiger Rohstoff in Form eines gemahlenen Pulvers, d.h. einer Fritte, in die erfindungsgemässe, zum Porösbrennen geeignete keramische Masse eingeführt.

Die erste Hauptkomponente der erfindungsgemässen Masse ist Aluminiumoxid Al₂O₃, genauer gesagt Aluminium-/Sauerstoffverbindungen, die über Röntgenfluoreszenz als "Al₂O₃" mengenmässig bestimmt werden können. Es kann als das kubische γ-Al₂O₃ (Tonerde) oder als das rhomboedrische (trigonale) α-Al₂O₃ (Korund, Saphir oder Rubin) eingesetzt werden. Es kann auch in Form von Rohstoffen, die hauptsächlich Al₂O₃ enthalten, eingesetzt werden. Beispiele hierfür sind Bauxit, aluminiumhaltiger Schiefer (unkalziniert oder kalziniert) und Andalusit (unkalziniert oder kalziniert). Der Al₂O₃-Gehalt in der erfindungsgemässen, gebrannten Masse beträgt 54-76 Gewichtsprozent, bevorzugt 60-70 Gewichtsprozent, besonders bevorzugt 64-70 Gewichtsprozent, bezogen auf die gebrannte Masse.

Die zweite Hauptkomponente der erfindungsgemässen Masse ist Siliziumdioxid SiO₂, genauer gesagt Silizium-/Sauerstoffverbindungen, die über Röntgenfluoreszenz als "SiO₂" mengenmässig bestimmt werden können. SiO₂ kann als Quarz oder Sand eingesetzt werden. Der SiO₂-Gehalt in der erfindungsgemässen, gebrannten Masse beträgt 18-35 Gewichtsprozent, bevorzugt 25-30 Gewichtsprozent, besonders bevorzugt 26-29 Gewichtsprozent, bezogen auf die gebrannte Masse.

Al₂O₃ und SiO₂ können auch zusammen in Form von Kaolin mit einem Zusatz von Al₂O₃ eingesetzt werden, um die erhöhten Al₂O₃-Gehalte in der erfindungsgemässen Masse zu erzielen. Bevorzugt betragen Al₂O₃- bzw. SiO₂-Gehalt 60-70 Gewichtsprozent bzw. 25-30 Gewichtsprozent, bezogen auf die gebrannte Masse. Besonders bevorzugt betragen Al₂O₃- bzw. SiO₂-Gehalt 64-70 Gewichtsprozent bzw. 26-29 Gewichtsprozent, bezogen auf die gebrannte Masse.

Die erfindungsgemässe Masse enthält im gebrannten Zustand Na₂O und K₂O als Flussmittel in Mengen von je 0,5-2 Gewichtsprozenten, bezogen auf die gebrannte Masse. Bevorzugt enthält die Masse Na₂O und K₂O in Mengen von je 0,5-1,5 Gewichtsprozenten, bezogen auf die gebrannte Masse. Gewünschtenfalls kann die Masse die weiteren Flussmittel CaO, Fe₂O₃, MgO, Li₂O, B₂O₃ und/oder BaO in Mengen von 0-1 bzw. 0-2 bzw. 0-5 bzw. 0-7 bzw. 0-6 bzw. 0-4 Gewichtsprozenten, bezogen auf die gebrannte Masse, enthalten. Wenn weitere Flussmittel CaO, Fe₂O₃, MgO, Li₂O, B₂O₃ und/oder BaO vorhanden sind, betragen ihre Mengen bevorzugt 0,1-1 bzw. 0,1-2 bzw. 0,5-5 bzw. 0,5-7 bzw. 0,5-6 bzw. 0,5-4 Gewichtsprozenten, bezogen auf die gebrannte Masse.

In einer bevorzugten Ausführungsform enthält die erfindungsgemässe Masse zusätzlich zu den oben erwähnten Na₂O und K₂O eine Kombination aus 0,1-0,4 Gewichtsprozent CaO, 0,1-0,4 Gewichtsprozent Fe₂O₃ und höchstens 0,02 Gewichtsprozent MgO, bezogen auf die gebrannte Masse.

In einer besonders bevorzugten Ausführungsform enthält die erfindungsgemässe Masse als die Flussmittel eine Kombination von 0,8-1,1 Gewichtsprozent Na₂O, 0,8-1,1 Gewichtsprozent K₂O, 0,2-0,3 Gewichtsprozent CaO, 0,2-0,3 Gewichtsprozent Fe₂O₃ und höchstens 0,02 Gewichtsprozent MgO, bezogen auf die gebrannte Masse. Wenn die weiteren optionalen Flussmittel CaO, Fe₂O₃, MgO, Li₂O, B₂O₃ und/oder BaO nicht explizit zugegeben werden, so betragen ihre Mengen bevorzugt je höchstens 0,01 Gewichtsprozent, bezogen auf die gebrannte Masse.

Die vorstehend erwähnten Flussmittel werden vorzugsweise, d.h. auch im erfindungsgemässen Verfahren, in Form eines glasartigen, gemahlenen Pulvers, d.h. einer Fritte, eingesetzt. Hierzu können die einzusetzenden Flussmittel Na₂O, K₂O, TiO₂, Li₂O, CaO, MgO, Fe₂O₃, B₂O₃ und/oder BaO in Mengen dergestalt, dass die anspruchsgemässen entsprechenden Gehalte in der gebrannten erfindungsgemässen keramischen Masse ergeben, mit mindestens einem Teil des einzusetzenden, hier vorzugsweise reinen SiO₂ aufgeschmolzen, die Schmelze in Wasser abgeschreckt und die erstarrte glasartige Schmelze zum Pulver vermahlen werden. Die zur Herstellung des glasartigen Pulvers eingesetzte Menge an SiO₂ wird vorzugsweise so gewählt, dass der mit Röntgenfluoreszenzspektroskopie bestimmte Massenanteil an SiO₂ (siehe unten) im fertigen, gemahlenen Pulver von 63% bis 70%, bezogen auf die Gesamtmasse des Pulvers, beträgt. Da das gemahlene glasartige Pulver alle einzusetzenden Flussmittel enthält, lässt sich der röntgenfluoreszenzspektroskopisch bestimmte Anteil jedes einzelnen Flussmittels in der fertigen, gebrannten keramischen Masse durch Multiplikation des röntgenfluoreszenzspektroskopisch bestimmten Anteils desselben Flussmittels im glasartigen Pulver mit dem mengenmässigen Anteil x der Fritte (0 < x < 1) an der Gesamtmenge aller zur Herstellung der erfindungsgemässen porösbrennbaren keramischen Masse verwendeten festen Zusätze (einschliesslich der Fritte) berechnen oder abschätzen. Der Versatz enthält dann bevorzugt auch das vorstehend beschriebene amorphe Pulver enthaltend die Flussmittel.

Die vorstehend und in den Ansprüchen angegebenen Mengenbereiche sind mit der Massgabe zu verstehen, dass die Summe der Mengen aller namentlich angegebenen Komponenten mindestens 98 Gewichtsprozent, bezogen auf die gebrannte Masse, ausmachen, wobei unvermeidbare Verunreinigungen und Wasser den Rest ausmachen. Eher bevorzugt ergibt die Summe der Mengen aller namentlich angegebenen Komponenten mindestens 99 Gewichtsprozent und besonders bevorzugt mindestens 99,5 Gewichtsprozent der gebrannten Masse.

Die mengenmässigen Anteile der in den Ansprüchen namentlich angegebenen Komponenten der erfindungsgemässen Masse und des oben erwähnten amorphen glasartigen gemahlenen Pulvers werden über Röntgenfluoreszenzspektroskopie bestimmt. Diese liefert zunächst die Gehalte an den Metallen; diese werden dann in entsprechenden Mengen der am häufigsten vorkommenden Oxide ausgedrückt. Z.B. liefert die Röntgenfluoreszenzspektroskopie zunächst einen Gehalt an Aluminium, der dann in einen Mengenanteil des häufigsten Oxides "Al₂O₃" umgerechnet und angegeben wird. Sofern ein Anteil eines Oxides als "0 Gewichtsprozent" angegeben ist, wird das so verstanden, dass der Anteil kleiner ist als die Nachweisgrenze dieser Messmethode, die etwa 0,01 Gewichtsprozent ist.

Als "unvermeidbare Verunreinigungen" werden insbesondere andere Metalloxide, anorganische Phosphate, Carbonate und Sulfate, die als Verunreinigung in den Ausgangsoxiden vorkommen können, verstanden. Der Begriff "unvermeidbare Verunreinigungen" sollte so verstanden werden, dass die Art und Menge dieser Verunreinigung die Eigenschaften des gebrannten keramischen Materials nicht wesentlich beeinflusst. Vorzugsweise sind die Gehalte an solchen unvermeidbaren Verunreinigungen so klein wie möglich.

Das erfindungsgemässe Verfahren wird bevorzugt so durchgeführt, dass der Versatz unter Mitverwendung von Wasser zu einem Schlicker verarbeitet wird. Zweckmässigerweise werden die Versätze der entwickelten Massen wie bisher im Schlickergussverfahren in porösen Gipsformen oder Kunststoffformen, mit oder ohne anliegendem Schlickerdruck verarbeitet, was trotz der deutlichen Änderung hinsichtlich der Zusammensetzung der jeweiligen Versätze zur Herstellung der jeweiligen Massen nach wie vor möglich ist. Das Trocknen der Giesslinge nach dem Entformen erfolgt bevorzugt durch konventionelle Weisstrocknung mittels Umluft/Abluft-Betrieb oder mittels Mikrowellentrocknung, wobei die Mikrowellentrocknung besonders bevorzugt ist. Die Giesslinge weisen nach dem Trocknen bevorzugt die Form eines Rohlings dergestalt auf, dass er nach dem Porösbrennen einen Sanitärartikel ergibt.

Besonders zweckmässig ist es bei der Herstellung des Versatzes, eine möglichst feine Kornverteilung zu erreichen. Der Siebrückstand > 45 µm sollte < = 10%, vorzugsweise < = 6% sein, d. h. die verwendeten Oxide sollten möglichst fein gemahlen sein.

Die erfindungsgemässe keramische Masse lässt sich zur Herstellung verschiedener gebrannter keramischer Artikel verwenden. Bevorzugte Gruppen solcher Artikel sind Sanitärartikel (z.B. alle Arten von Lavabos, Abdeckplatten, Standlavabos, Ablagen und Accessoires, Urinaltrennwandplatten); Tafelgeschirr; und Baumaterialien (insbesondere Ziegel, Kacheln und Fliesen).

Die erfindungsgemässe keramische Masse wird bevorzugt bei einer Brenntemperatur der Masse im Freibrand bei 1150 bis 1280°C gebrannt, vorzugsweise während 12 bis 25 Stunden (kalt/kalt). Als die Gehalte "nach dem Brennen" wird im Rahmen der vorliegenden Anmeldung verstanden, dass die Gehalte nach einem Brennen bei 1250°C während 22 Stunden im Freibrand und nach Auskühlen auf Raumtemperatur unter Feuchtigkeitsausschluss bestimmt werden.

Generell kann das Zusammenmischen des Versatzes, das Giessen und das Brennen nach vorbekannten Verfahren, etwa aus den eingangs zitierten Publikationen, erfolgen.

Die so erhaltenen gebrannten erfindungsgemässen keramischen Massen erlauben Scherbenstärken von bis zu 4 mm herunter, währenddem bei den vorbekannten Massen die Scherbenstärken normalerweise nur etwa bis 8 mm herunter gehen. Es sind Kantenradien ab etwa 2 mm möglich; üblich waren bislang Kantenradien ab etwa 4 mm. Bei den erhaltenen Scherben sind scharfe filigrane Konturen gewährleistet. Bei weissen Scherben werden keine gelben Kanten beobachtet. Die erhaltenen Scherben zeichnen sich durch die folgenden typischen mechanischen Eigenschaften aus:
- Biegefestigkeit mindestens 110 MPa; Bestimmung nach DIN EN 843-1: 2008-08 (Vier-Punkt-Biegeanordnung).
- E-Modul grösser 80 GPa; G-Modul grösser 30 GPa und Poissonzahl µ grösser 0,25; Bestimmung E-Modul, G-Modul und Poissonzahl µ nach DIN 843-2:2007-3, Verfahren B.
- Wasseraufnahme des gebrannten Scherben kleiner gleich 10 Prozent; bestimmt nach der Kochmethode.

Die erfindungsgemässen keramischen Massen sind aufgrund der chemischen Zusammensetzung, des bevorzugten Brennverfahrens und des beobachteten Wasseraufnahme nach dem Brennen bovorzugt als porösbrennende Massen anzusehen. Sie weisen im gebrannten Zustand eine Wasseraufnahme im Bereich von grösser 1 bis 10 Gewichtsprozenten, insbesondere von 4 bis 10 Gewichtsprozenten, bezogen auf die gebrannte Masse, auf.

In den nachfolgenden Tabelle 1 wird ein Ausführbeispiel der erfindungsgemässen porösgebrannten Masse mit ihrer chemischen Zusammensetzung angegeben.

**Tabelle 1: Chemische Zusammensetzung (Gewichtsprozente, bezogen auf die Masse nach dem Brennen)**

| Oxid | Gehalt in Gewichtsprozenten, bezogen auf die gebrannte Masse (gemessen mit Röntgenfluoreszenzspektroskopie) |
|---|---|
| SiO₂ | 27,81 |
| Al₂O₃ | 64,52 |
| Na₂O | 0,95 |
| K₂O | 0,91 |
| TiO₂ | 0,48 |
| Li₂O | < 0,01 |
| CaO | 0,17 |
| MgO | 0,95 |
| Fe₂O₃ | 0,30 |
| B₂O₃ | < 0,01 |
| BaO | < 0,01 |

## Patentansprüche

1. Zum Porösbrennen geeignete keramische Masse, umfassend nach dem Brennen:
SiO₂ 18-35 Gewichtsprozent,
Al₂O₃ 54-76 Gewichtsprozent,
Na₂O 0,5-2 Gewichtsprozent,
K₂O 0,5-2 Gewichtsprozent,
TiO₂ 0-4 Gewichtsprozent,
Li₂O 0-7 Gewichtsprozent,
CaO 0-1 Gewichtsprozent,
MgO 0-5 Gewichtsprozent,
Fe₂O₃ 0-2 Gewichtsprozent,
B₂O₃ 0-6 Gewichtsprozent und
BaO 0-4 Gewichtsprozent,
bezogen auf die Masse nach dem Brennen, wobei die zu brennende keramische Masse aus Na₂O, K₂O, TiO₂, Li₂O, CaO, MgO, Fe₂O₃, B₂O₃ und/oder BaO ausgewählte Flussmittel in Mengen dergestalt, dass sich die entsprechenden Gehalte in der gebrannten Masse ergeben, in Form einer Fritte enthält und frei von schamottierten Tonen ist, mit der Massgabe, dass die Summe der Mengen aller namentlich angegebenen Komponenten mindestens 98 Gewichtsprozent, bezogen auf die gebrannte Masse, ausmachen.

2. Keramische Masse nach Anspruch 1, umfassend nach dem Brennen:
SiO₂ 18-35 Gewichtsprozent,
Al₂O₃ 54-76 Gewichtsprozent,
Na₂O 0,5-2 Gewichtsprozent,
K₂O 0,5-2 Gewichtsprozent,
TiO₂ 0-0,01 Gewichtsprozent,
Li₂O 0-0,01 Gewichtsprozent,
CaO 0-0,01 Gewichtsprozent,
MgO 0-0,01 Gewichtsprozent,
Fe₂O₃ 0-0,01 Gewichtsprozent,
B₂O₃ 0-0,01 Gewichtsprozent und
BaO 0-0,01 Gewichtsprozent,
bezogen auf die Masse nach dem Brennen.

3. Keramische Masse nach Anspruch 1, umfassend nach dem Brennen:
SiO₂ 18-35 Gewichtsprozent,
Al₂O₃ 54-76 Gewichtsprozent,
Na₂O 0,5-2 Gewichtsprozent,
K₂O 0,5-2 Gewichtsprozent,
TiO₂ 0,5-4 Gewichtsprozent,
Li₂O 0,5-7 Gewichtsprozent,
CaO 0,1-1 Gewichtsprozent,
MgO 0,5-5 Gewichtsprozent,
Fe₂O₃ 0,1-2 Gewichtsprozent,
B₂O₃ 0,5-6 Gewichtsprozent und
BaO 0,5-4 Gewichtsprozent,
bezogen auf die Masse nach dem Brennen.

4. Keramische Masse nach Anspruch 1, umfassend nach dem Brennen:
SiO₂ 25-30 Gewichtsprozent,
Al₂O₃ 60-70 Gewichtsprozent,
Na₂O 0,5-1,5 Gewichtsprozent,
K₂O 0,5-1,5 Gewichtsprozent,
TiO₂ 0-1 Gewichtsprozent,
Li₂O 0-0,01 Gewichtsprozent,
CaO 0-0,5 Gewichtsprozent,
MgO 0-0,02 Gewichtsprozent,
Fe₂O₃ 0-0,5 Gewichtsprozent,
B₂O₃ 0-0,01 Gewichtsprozent und
BaO 0-0,01 Gewichtsprozent,
bezogen auf die Masse nach dem Brennen.

5. Keramische Masse nach Anspruch 1, umfassend nach dem Brennen:
SiO₂ 26-29 Gewichtsprozent,
Al₂O₃ 64-70 Gewichtsprozent,
Na₂O 0,8-1,1 Gewichtsprozent,
K₂O 0,8-1,1 Gewichtsprozent,
TiO₂ 0,3-0,7 Gewichtsprozent,
Li₂O 0-0,01 Gewichtsprozent,
CaO 0,2-0,3 Gewichtsprozent,
MgO 0-0,02 Gewichtsprozent,
Fe₂O₃ 0,2-0,3 Gewichtsprozent,
B₂O₃ 0-0,01 Gewichtsprozent und
BaO 0-0,01 Gewichtsprozent,
bezogen auf die Masse nach dem Brennen.

6. Sanitärartikel, Tafelgeschirr oder Baumaterial, bestehend aus einer gebrannten keramischen Masse nach einem der Ansprüche 1 bis 5.

7. Verfahren zur Herstellung einer zum Porösbrennen geeigneten keramischen Masse nach einem der Ansprüche 1 bis 5, umfassend die Schritte:
a) Bereitstellen der aus Na₂O, K₂O, TiO₂, Li₂O, CaO, MgO, Fe₂O₃, B₂O₃ und BaO ausgewählten Flussmittel, in den jeweiligen für die zum Porösbrennen geeignete keramische Masse erforderlichen Mengen;
b) Aufschmelzen der Flussmittel in einer Menge SiO₂, die 10 bis 20 Gewichtsprozenten der gesamten Menge SiO₂ in der zum Porösbrennen geeigneten keramischen Masse entspricht;
c) Abschrecken der Schmelze in Wasser zum Erhalt eines amorphen, glasartigen Materials;
d) Vermahlen des amorphen glasartigen Materials zu einem Pulver;
e) Vermischen des amorphen glasartigen Pulvers mit der restlichen, für die zum Porösbrennen geeignete keramische Masse erforderlichen Menge SiO₂ und der für die zum Porösbrennen geeignete keramische Masse erforderlichen Menge Al₂O₃, und, gewünschtenfalls, mit Wasser unter Erhalt eines Schlickers;
f) gewünschtenfalls, sofern im Schritt e) Wasser mitverwendet wurde, Giessen des Schlickers in eine Gussform zum Erhalt eines Giesslings;
g) sofern Schritt f) durchgeführt wurde, Entformen des Giesslings; und
h) sofern im Schritt e) Wasser mitverwendet wurde, Trocknen des Schlickers.

8. Verfahren nach Anspruch 7, **dadurch gekennzeichnet, dass** im Schritt e) Wasser mitverwendet und ein Schlicker erhalten wird, und dass Schritt f) durchgeführt wird.

9. Verfahren nach Anspruch 8, **dadurch gekennzeichnet, dass** die Gussform eine poröse Gipsform oder eine Kunststoffform ist.

## Claims

1. Ceramic mass which is suited for firing into a porous form, comprising after firing:
from 18 to 35 % by weight of SiO₂,
from 54 to 76 % by weight of Al₂O₃,
from 0,5 to 2 % by weight of Na₂O,
from 0,5 to 2 % by weight of K₂O,
from 0 to 4 % by weight of TiO₂,
from 0 to 7 % by weight of Li₂O,
from 0 to 1 % by weight of CaO,
from 0 to 5 % by weight of MgO,
from 0 to 2 % by weight of Fe₂O₃,
from 0 to 6 % by weight of B₂O₃ and
from 0 to 4 % by weight of BaO,
these contents being based on the fired mass, wherein the mass to be fired contains fluxes selected from Na₂O, K₂O, TiO₂, Li₂O, CaO, MgO, Fe₂O₃, B₂O₃ and/or BaO in the form of a frit and in such amounts that the corresponding contents in the fired mass are obtained, and contains no fire clay, with the proviso that the sum of the contents of all the named components gives at least 98 % by weight based on the fired mass.

2. Ceramic mass according to claim 1, comprising after firing:
from 18 to 35 % by weight of SiO₂,
from 54 to 76 % by weight of Al₂O₃,
from 0,5 to 2 % by weight of Na₂O,
from 0,5 to 2 % by weight of K₂O,
from 0 to 0,01 % by weight of TiO₂,
from 0 to 0,01 % by weight of Li₂O,
from 0 to 0,01 % by weight of CaO,
from 0 to 0,01 % by weight of MgO,
from 0 to 0,01 % by weight of Fe₂O₃,
from 0 to 0,01 % by weight of B₂O₃ and
from 0 to 0,01 % by weight of BaO,
these contents being based on the mass after firing.

3. Ceramic mass according to claim 1, comprising after firing:
from 18 to 35 % by weight of SiO₂,
from 54 to 76 % by weight of Al₂O₃,
from 0,5 to 2 % by weight of Na₂O,
from 0,5 to 2 % by weight of K₂O,
from 0,5 to 4 % by weight of TiO₂,
from 0,5 to 7 % by weight of Li₂O,
from 0,1 to 1 % by weight of CaO,
from 0,5 to 5 % by weight of MgO,
from 0,1 to 2 % by weight of Fe₂O₃,
from 0,5 to 6 % by weight of B₂O₃ and
from 0,5 to 4 % by weight of BaO,
these contents being based on the mass after firing.

4. Ceramic mass according to claim 1, comprising after firing:
from 25 to 30 % by weight of SiO₂,
from 60 to 70 % by weight of Al₂O₃,
from 0,5 to 1,5 % by weight of Na₂O,
from 0,5 to 1,5 % by weight of K₂O,
from 0 to 1 % by weight of TiO₂,
from 0 to 0,01 % by weight of Li₂O,
from 0 to 0,5 % by weight of CaO,
from 0 to 0,02 % by weight of MgO,
from 0 to 0,5 % by weight of Fe₂O₃,
from 0 to 0,01 % by weight of B₂O₃ and
from 0 to 0,01 % by weight of BaO,
these contents being based on the mass after firing.

5. Ceramic mass according to claim 1, comprising after firing:
from 26 to 29 % by weight of SiO₂,
from 64 to 70 % by weight of Al₂O₃,
from 0,8 to 1,1 % by weight of Na₂O,
from 0,8 to 1,1 % by weight of K₂O,
from 0,3 to 0,7 % by weight of TiO₂,
from 0 to 0,01 % by weight of Li₂O,
from 0,2 to 0,3 % by weight of CaO,
from 0 to 0,02 % by weight of MgO,
from 0,2 to 0,3 % by weight of Fe₂O₃,
from 0 to 0,01 % by weight of B₂O₃ and
from 0 to 0,01 % by weight of BaO,
these contents being based on the mass after firing.

6. Sanitary article, table crockery or building material consisting of a fired ceramic mass according to one of claims 1 to 5.

7. Process for the preparation of a ceramic mass which is suited for firing into a porous form according to one of claims 1 to 5, comprising the steps:
a) providing the fluxes selected from Na₂O, K₂O, TiO₂, Li₂O, CaO, MgO, Fe₂O₃, B₂O₃ and BaO, in the respective amounts which are necessary for the ceramic mass suited for firing into a porous form;
b) melting of the fluxes in an amount of SiO₂ which corresponds to from 10 to 20 % by weight of the total content of SiO₂ in the ceramic mass suited for firing into a porous form;
c) quenching of the melt in water to obtain a glassy amorphous material;
d) milling of the glassy amorphous material to a powder;
e) mixing of the glassy amorphous powder with the remaining amount of SiO₂ which is necessary for the ceramic mass suited for firing into a porous form, with the amount of Al₂O₃ which is necessary for the ceramic mass suited for firing into a porous form and, optionally, with water, to obtain a slip;
f) optionally, if water was co-used in step e), casting of the slip into a mould to obtain a moulded body;
g) if step f) was carried out, removal of the moulded body from the mould; and
h) if water was co-used in step e), drying of the slip.

8. Process according to claim 7, **characterised in that** in step e) water is co-used and a slip is obtained and **in that** step f) is carried out.

9. Process according to claim 8, **characterised in that** the mould is a porous plaster mould or a plastic mould.

## Revendications

1. Masse céramique apte à être cuite en forme poreuse, comprenant après la cuisson:
de 18 à 35 % en poids de SiO₂,
de 54 à 76 % en poids de Al₂O₃,
de 0,5 à 2 % en poids de Na₂O,
de 0,5 à 2 % en poids de K₂O,
de 0 à 4 % en poids de TiO₂,
de 0 à 7 % en poids de Li₂O,
de 0 à 1 % en poids de CaO,
de 0 à 5 % en poids de MgO,
de 0 à 2 % en poids de Fe₂O₃,
de 0 à 6 % en poids de B₂O₃ et
de 0 à 4 % en poids de BaO,
ces teneurs étant par rapport à la masse après la cuisson, ou la masse à être cuite comprend des flux choisis parmi Na₂O, K₂O, TiO₂, Li₂O, CaO, MgO, Fe₂O₃, B₂O₃ et/ou BaO en forme d'une fritte et dans de telles quantités que les teneurs correspondants dans la masse cuite en résultent, et la masse est libre d'argile chamottée, sous réserve que la somme des teneurs de tous les components nommés donne au moins 98 % en poids par rapport à la masse cuite.

2. Masse céramique selon la revendication 1, comprenant après la cuisson:
de 18 à 35 % en poids de SiO₂,
de 54 à 76 % en poids de Al₂O₃,
de 0,5 à 2 % en poids de Na₂O,
de 0,5 à 2 % en poids de K₂O,
de 0 à 0,01 % en poids de TiO₂,
de 0 à 0,01 % en poids de Li₂O,
de 0 à 0,01 % en poids de CaO,
de 0 à 0,01 % en poids de MgO,
de 0 à 0,01 % en poids de Fe₂O₃,
de 0 à 0,01 % en poids de B₂O₃ et
de 0 à 0,01 % en poids de BaO,
ces teneurs étant par rapport à la masse après la cuisson.

3. Masse céramique selon la revendication 1, comprenant après la cuisson:
de 18 à 35 % en poids de SiO₂,
de 54 à 76 % en poids de Al₂O₃,
de 0,5 à 2 % en poids de Na₂O,
de 0,5 à 2 % en poids de K₂O,
de 0,5 à 4 % en poids de TiO₂,
de 0,5 à 7 % en poids de Li₂O,
de 0,1 à 1 % en poids de CaO,
de 0,5 à 5 % en poids de MgO,
de 0,1 à 2 % en poids de Fe₂O₃,
de 0,5 à 6 % en poids de B₂O₃ et
de 0,5 à 4 % en poids de BaO,
ces teneurs étant par rapport à la masse après la cuisson.

4. Masse céramique selon la revendication 1, comprenant après la cuisson:
de 25 à 30 % en poids de SiO₂,
de 60 à 70 % en poids de Al₂O₃,
de 0,5 à 1,5 % en poids de Na₂O,
de 0,5 à 1,5 % en poids de K₂O,
de 0 à 1 % en poids de TiO₂,
de 0 à 0,01 % en poids de Li₂O,
de 0 à 0,5 % en poids de CaO,
de 0 à 0,02 % en poids de MgO,
de 0 à 0,5 % en poids de Fe₂O₃,
de 0 à 0,01 % en poids de B₂O₃ et
de 0 à 0,01 % en poids de BaO,
ces teneurs étant par rapport à la masse après la cuisson.

5. Masse céramique selon la revendication 1, comprenant après la cuisson:
de 26 à 29 % en poids de SiO₂,
de 64 à 70 % en poids de Al₂O₃,
de 0,8 à 1,1 % en poids de Na₂O,
de 0,8 à 1,1 % en poids de K₂O,
de 0,3 à 0,7 % en poids de TiO₂,
de 0 à 0,01 % en poids de Li₂O,
de 0,2 à 0,3 % en poids de CaO,
de 0 à 0,02 % en poids de MgO,
de 0,2 à 0,3 % en poids de Fe₂O₃,
de 0 à 0,01 % en poids de B₂O₃ et
de 0 à 0,01 % en poids de BaO,
ces teneurs étant par rapport à la masse après la cuisson.

6. Article sanitaire, vaisselle de table ou matériau de construction consistant d'une masse céramique cuite selon l'une des revendications 1 à 5.

7. Procédé pour la production d'une masse céramique apte à être cuite en forme poreuse selon l'une des revendications 1 à 5, comprenant les étapes:
a) mise à disposition des flux choisis parmi Na₂O, K₂O, TiO₂, Li₂O, CaO, MgO, Fe₂O₃, B₂O₃ et BaO, dans les quantités respectives nécessaires pour la masse céramique apte à être cuite en forme poreuse;
b) fusion des flux dans une quantité de SiO₂ correspondant à de 10 à 20 % en poids de la teneur totale de SiO₂ dans la masse céramique apte à être cuite en forme poreuse;
c) trempage du matériau fondu dans de l'eau afin d'obtenir un matériau amorphe vitreux;
d) réduction du matériau amorphe vitreux en poudre;
e) mélange de la poudre amorphe vitreuse avec le restant de la quantité de SiO₂ nécessaire pour la masse céramique apte à être cuite en forme poreuse, avec la quantité de Al₂O₃ nécessaire pour la masse céramique apte à être cuite en forme poreuse, et, éventuellement, avec de l'eau, afin d'obtenir une barbotine;
f) éventuellement, dans le cas ou de l'eau a été employée dans l'étape e), coulage de la barbotine dans un moule afin d'obtenir un objet moulé;
g) dans le cas où l'étape f) a été exécutée, extraction de l'objet moulé du moule; et
h) en cas ou de l'eau a été employée dans l'étape e), séchage de la barbotine.

8. Procédé selon la revendication 7, **caractérisé en ce qu'**on emploie de l'eau dans l'étape e) et une barbotine est obtenue, et **en ce que** l'étape f) est exécutée.

9. Procédé selon la revendication 8, **caractérisé en ce que** le moule est un moule poreux en plâtre ou un moule en plastique.
